# EUROPEAN PATENT APPLICATION

(11) **EP 2 058 632 A2**
(43) Date of publication of application: **13.05.2009**
(21) Application number: 08014554.3
(22) Date of filing: 14.08.2008
(51) Int. Cl.: G01F 1/684

(54) **Configuration of air intake parts applied to thermal type air flow measuring instrument**

(30) Priority: 06.09.2007 JP 2007230925
(71) Applicant: Hitachi Ltd., Chiyoda-ku Tokyo 100-8280 (JP)
(72) Inventor: Shoyama, Taiji, Tokyo 100-8220 (JP); Asano, Yasuhiro, Ibaraki (JP); Kikawa, Hiromu, Ibaraki (JP); Kobayashi, Chihiro, Tokyo 100-8220 (JP)
(74) Representative: Erny, Tobias

(57) **Abstract**

It is an object of the present invention to expand an air flow measuring range of a thermal type air flow measuring instrument. A squeeze 157 is provided upstream of a thermal type air flow measuring instrument 100 of a main air passage 155 to expand an air flow measuring range on the low flow rate side. Furthermore, a slit 158 is provided to introduce air from the outside of the main air passage 155 to a position downstream of the squeeze 157 where flow exfoliation occurs without passing through a main air passage inlet 156 to prevent a pressure drop from increasing at a high flow rate and expand the air flow measuring range on the high flow rate side.

## Description

### Background of the invention and related art statement

The present invention relates to air intake parts applied to a thermal type air flow measuring instrument suitable for use in an air intake flow rate measurement of an internal combustion engine.

There is known a thermal type air flow measuring instrument as a flow rate measuring technique for an internal combustion engine. This instrument uses the fact that there is a correlation between an amount of heat deprived from a heating resistor and an inflow rate, can directly measure a mass flow rate necessary for engine combustion control, and is therefore widely used particularly as a flowmeter for air fuel ratio control of vehicles (see JP-A-11-14423).

As a known technique most similar to the present invention, an example is shown where a squeeze is provided upstream of an auxiliary air passage of a thermal type air flow measuring instrument of an intake pipe component (see JP-A-10-73465).

### Brief Summary of the Invention

The air flow rate required for an engine is small when the engine is idling because the engine speed is low, whereas the air flow rate increases under a high engine speed condition because more engine power is required. In this case since the cross sectional area of an intake pipe to which a thermal type air flow measuring instrument is attached is always constant, the air flow velocity measured by the heating resistor is low when the flow rate is low and high when the flow rate is high.

The heating resistor has the function of measuring heat discharge to air and outputting the measured heat discharge as an air flow rate signal, and can theoretically measure the air flow rate even at an imperceptible flow rate or high flow velocity close to sound velocity. However, the air flow measuring range is actually limited when the measuring accuracy of the heating resistor and durability affected by stuck dust included in the air or the like are taken into consideration. That is, since heat discharge of the heating resistor is extremely small at an imperceptible flow velocity, influences of natural convection due to heating and measuring errors due to individual variations of the heating resistor or the like relatively increase, resulting in a reduction of the measuring accuracy. Moreover, the collision energy of dust at a high flow velocity is large, causing dust to be stuck to the heating resistor more easily. As a rough estimate, an appropriate flow velocity actually used for the thermal type air flow measuring instrument is considered to range from 0.5 m/s to 50 m/s.

However, in the recent automobile industry, there is a tendency to make fuel consumption compatible with power of a vehicle. Therefore, both a lower flow rate with a reduced idling engine speed for an improvement of fuel consumption and a higher flow rate for securing engine power are required.

To realize a lower flow rate, the passage area of the intake parts (ducts or the like) where the heating resistor is installed should be reduced so that the flow velocity is secured even when the flow rate decreases. However, reducing the passage area of the intake parts causes a pressure drop of the air passage to increase at a high flow rate, making it impossible to obtain the air flow rate necessary to obtain engine power output.

It is an object of the present invention to expand the air flow measuring range of a thermal type air flow measuring instrument.

In the case of the thermal type air flow measuring instrument, it is necessary to arrange an auxiliary air passage in a main air passage made up of intake parts for the purpose of a reduction of measuring errors due to backflow or the like and set up a heating resistor in this auxiliary air passage. Setting up the measuring section including the auxiliary air passage and heating resistor in the air passage causes the effective cross section area through which air flows in the main air passage to reduce extremely. Thus, a pressure drop in the main air passage also increases extremely.

Therefore, a squeezing configuration may be provided in the main air passage upstream of the measuring section. In this way, by increasing the flow velocity in the center of the main air passage using the squeeze and setting up an inlet of the auxiliary air passage in the vicinity of the increased flow velocity, it is possible to increase heat discharge of the heating resistor even at a small flow rate.

Furthermore, this squeezing configuration is provided in part of the main air passage in the air flow direction and the cross section area of the main air passage at a position where the measuring section is disposed is designed to be greater than the cross section area of the main air passage at a position where the squeezing configuration is disposed. Furthermore, the effective cross section area of the main air passage through which the air flows at the position where the measuring section is installed is designed to be the same as the effective cross section area through which the air flows in the part where the squeezing configuration is disposed. This prevents the cross section area of the main air passage from narrowing at a position where the measuring section is disposed, and can thereby suppress increases in pressure drop.

Provision of the squeezing configuration as described above allows the air flow measuring range of the thermal type air flow measuring instrument to expand.

However, due to the presence of the measuring section at the location where flow velocity is increased, this measuring section becomes an obstacle and it is actually impossible to completely suppress increases in pressure drop. To prevent this, the distance between the measuring section and the squeezing configuration needs to be increased. Increasing the distance however reduces the flow velocity in the heating resistor, causes the effect of the squeezing configuration to be lost and also reduces the effect of expanding the air flow measuring range.

To suppress increases in this pressure drop, the present invention forms, at an exfoliation part that occurs downstream of the squeezing configuration, an air introducing passage for introducing air, which is different from the air flowing through the main air passage inlet provided upstream of the squeezing configuration. This air introducing passage is preferably formed in a slit shape along a circumferential direction of the main air passage downstream of the squeezing configuration and upstream of the measuring section.

Feeding the air, which is different from the air flowing through the inlet of the main air passage, into the downstream of the squeezing configuration, allows the flow rate of the air flowing through the main air passage to increase while keeping the flow velocity at the center of the main air passage increased. The higher the flow rate at which the air flows through the squeezing configuration, that is, the higher the flow velocity at which the air flows through the squeezing configuration, the more air flows through this air introducing passage. This is because exfoliation occurs in the air flow downstream of the squeezing configuration and a pressure decreases, and the higher the flow rate at which the air flows through the squeezing configuration, the greater the pressure drop, and the amount of air introduced into the exfoliation part that occurs downstream of the squeezing configuration through the air introducing passage increases due to the increased pressure difference. Therefore, the amount of air flowing through the air introducing passage is small when the flow rate of the main air passage is low and large when the flow rate is high.

The present invention provides the squeezing configuration to increase the flow velocity of air flowing through the measuring section when the flow rate is low and introduce air into the exfoliation part produced downstream of the squeezing configuration through the air introducing passage when the flow rate is high, and can thereby replenish the main air passage with air and expand the air flow measuring range.

Other objects, features and advantages of the invention will become apparent from the following description of the embodiments of the invention taken in conjunction with the accompanying drawings.

### Brief description of the several views of the drawing

Fig. 1 is a configuration diagram of an air flow measuring instrument showing an embodiment of the present invention;
Fig. 2 is a partially enlarged view of the air flow measuring instrument in Fig. 1;
Fig. 3 shows a state of Fig. 1 in which no slit is provided;
Fig. 4 is a configuration diagram of the air flow measuring instrument showing another embodiment of the present invention;
Fig. 5 is a partially enlarged view of the air flow measuring instrument in Fig. 4;
Fig. 6 is a cross section of a schematic configuration of a typical thermal type air flow measuring instrument;
Fig. 7 is a view of Fig. 6 seen from an upstream direction of intake air flow;
Fig. 8 is a schematic circuit configuration diagram of the thermal type air flow measuring instrument;
Fig. 9 is a schematic system configuration diagram of an internal combustion engine using the thermal type air flow measuring instrument;
Fig. 10 is a graph showing an output of the thermal type air flow measuring instrument with respect to a flow velocity;
Fig. 11 is a graph showing an output of the thermal type air flow measuring instrument with respect to a flow velocity when the passage bore (cross section area) is changed; and
Fig. 12 is a graph showing an output with respect to a flow velocity of a product according to the present invention.

### Detailed description of the invention

Hereinafter, embodiments of the present invention will be explained.

### [Embodiment 1]

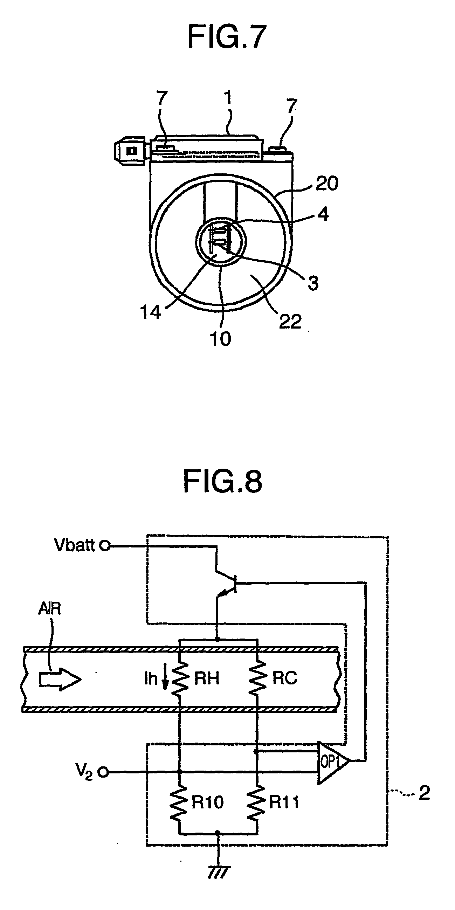

Operating principles of a thermal type air flow measuring instrument using a heating resistor will be explained as an example of an intake air measuring instrument. Fig. 8 is a schematic configuration circuit diagram of the thermal type air flow measuring instrument.

The drive circuit of the thermal type air flow measuring instrument is roughly divided into and constructed of a bridge circuit and a feedback circuit. The bridge circuit is constructed of a heating resistor RH for measuring an intake air flow, a temperature sensing resistor RC for compensating an intake air temperature and R10 and R11, and a heating current Ih is let flow through the heating resistor RH so as to keep a constant temperature difference between the heating resistor RH and the temperature sensing resistor RC while giving feedback using an operational amplifier OP1 and an output signal V2 in accordance with the air flow rate is outputted. That is, when the flow velocity is high, the amount of heat deprived from the heating resistor RH is large, and therefore more heating current Ih is let flow. On the contrary, when the flow velocity is low, the amount of heat deprived from the heating resistor RH is small and therefore the heating current required is also small.

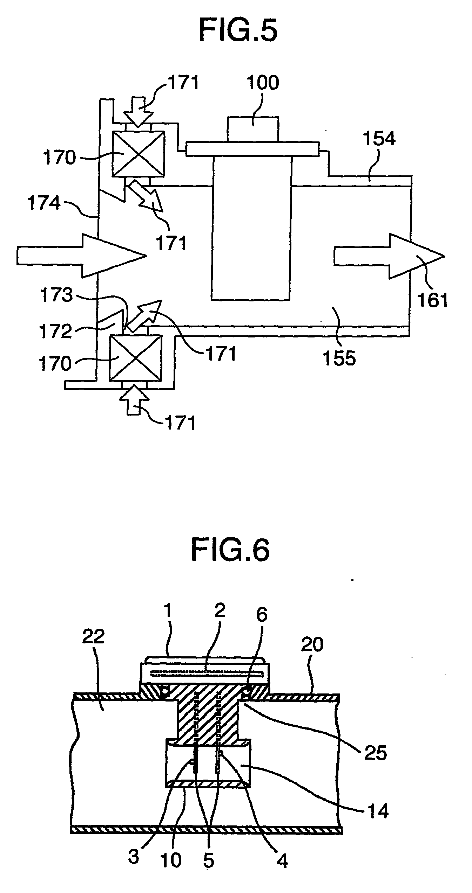

Fig. 6 is a cross section showing an example of the thermal type air flowmeter and Fig. 7 is an outside view thereof seen from the upstream (left side).

Examples of components of the thermal type air flow measuring instrument include a housing means 1 with a built-in circuit substrate 2 which makes up the drive circuit and an auxiliary air passage component 10 made up of an insulator means, and a heating resistor (RH) 3 for detecting an air flow rate and a temperature sensing resistor (RC) 4 for compensating an intake air temperature are arranged in the auxiliary air passage component 10 so as to be electrically connected to the circuit substrate 2 via supports 5 made up of a conductive means and the thermal type air flow measuring instrument is constructed of the housing 1, circuit substrate 2, auxiliary air passage, heating resistor 3 and temperature sensing resistor 4 or the like as a single module. Furthermore, a hole (opening) 25 is formed in the wall surface of a main air passage component 20 making up an intake duct and the auxiliary air passage part of the thermal type air flow measuring instrument is inserted from outside through this hole 25 and the wall surface of the auxiliary air passage component and the housing means 1 are fixed using screws 7 or the like so as to maintain mechanical strength. Furthermore, a seal means 6 is attached between the auxiliary air passage component 10 and main air passage component 20 to keep airtightness inside and outside the intake pipe.

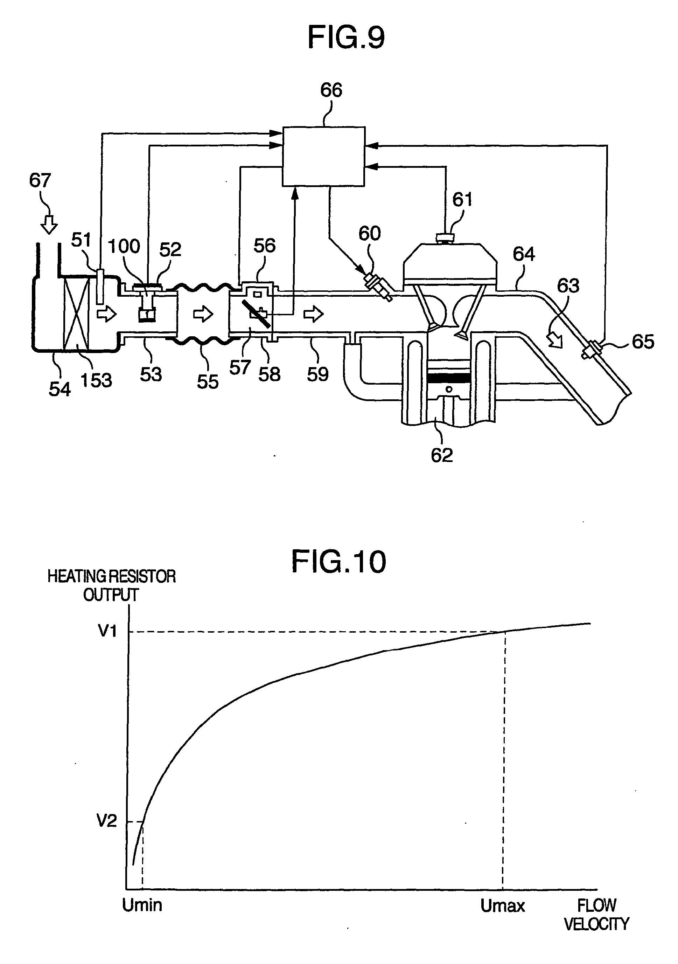

Fig. 9 shows an embodiment where a thermal type air flow measuring instrument 100 is applied to an electronic fuel jet type internal combustion engine. Intake air 67 introduced from an air cleaner 54 is passed through a body 53 (also simply referred to as a "duct") of the thermal type air flow measuring instrument 100 formed of the main air passage component 20, an intake duct 55, a throttle body 58 and an intake manifold 59 provided with an injector 60 and taken into an engine cylinder 62. On the other hand, a gas 63 produced in the engine cylinder is exhausted through an exhaust manifold 64.

An air flow rate signal and pressure signal outputted from a circuit module 52 of the thermal type air flow measuring instrument 100, an intake air temperature signal from a temperature sensor 51, a throttle valve angle signal outputted from a throttle angle sensor 57, an air/fuel ratio signal outputted from an air/fuel ratio sensor 65 provided in the exhaust manifold 64 and an engine speed signal outputted from an engine speed meter 61 or the like are inputted to a control unit 66. The control unit 66 performs consecutive operation on these signals, calculates an optimal amount of fuel jet and opening of an idle air control valve 56 and controls the injector 60 and idle air control valve 56 using the values.

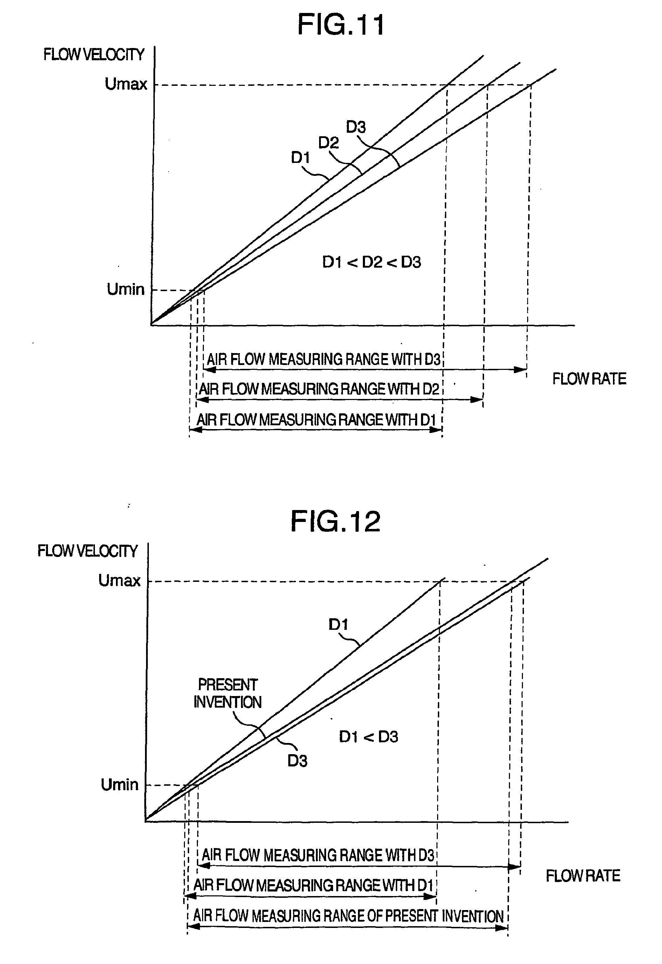

Next, the output of the thermal type air flow measuring instrument 100 will be explained using Fig. 10 and Fig. 11.

Fig. 10 shows the output (heat discharge) of the heating resistor 3 versus the flow velocity with the thermal type air flow measuring instrument attached to a certain main air passage component 20. The horizontal axis shows a flow velocity and the vertical axis shows an output of the heating resistor 3. Since the output of the heating resistor 3 has a biquadratic relationship with the flow velocity, a nonlinear output is obtained as shown in the figure.

The heating resistor 3 can theoretically measure heat discharge even at an extremely low flow velocity or a high flow velocity close to sound velocity. However, when actually used as the air flowmeter for an automobile or the like, the flow velocity range has a limit. This is because there is concern about dust stuck to the heating resistor 3 when the flow velocity is high and concern about influences of variations of individual differences by manufacturing and natural convection when the flow velocity is low.

The thermal type air flow measuring instrument 100 for automobile applications is generally disposed downstream of an air filter element 153 disposed in the air cleaner as shown in Fig. 9 and dust included in the air is collected by the air filter element 153 and only clean air can reach the thermal type air flow measuring instrument 100. However, the dust collection performance of the air filter element 153 is not actually perfect and at least dust on the order of several microns passes through the air filter element 153 and reaches the thermal type air flow measuring instrument 100.

The heating resistor 3 which is the sensing part of the thermal type air flow measuring instrument 100 has a structure preventing dust from sticking, but when dust collides at a high flow velocity, the collision energy of dust is large and there is a high possibility that dust may stick to the heating resistor 3. Therefore, a limit needs to be placed on a maximum air flow velocity measured by the thermal type air flow measuring instrument 100.

There are two problems with a minimum flow velocity. One is an individual difference caused by manufacturing variations of the heating resistor 3. For example, coating with glass or the like is generally provided around the heating resistor 3 to prevent dust from sticking to the heating resistor 3. Variations in the thickness of this coating are always produced in the process of manufacturing and these variations have influences on heat discharge of the heating resistor 3. These influences become noticeable when the flow velocity is extremely low.

The second problem is influences of natural convection. Since the heating resistor 3 is a heating body, the air around the heating resistor 3 is heated. Of static air, heated air moves toward the upper part where temperature is low due to a gravitational relationship. Moreover, the moved air needs to be complemented from the lower part. This produces the aforementioned air flow around the heating resistor 3. At a high enough flow velocity, such an air flow is generally a forcible flow and so this natural convection can be ignored. However, at an extremely low flow velocity, the influences of this natural convection can no longer be ignored and not only the actual flow velocity but also the influences of this natural convection are measured, and therefore the air flow velocity cannot be measured accurately.

As explained above, limits should be placed on a minimum flow velocity and a maximum flow velocity of the thermal type air flow measuring instrument 100 used for an automobile. According to the author's experience, a rough estimate of the flow velocity range is from a minimum flow velocity (Umin) of approximately 0.5 m/s to a maximum flow velocity (Umax) of approximately 50 m/s. Of course, these numerical values may vary depending on the structure and operating environment and they are merely values for reference.

Next, the duct bore and the flow measuring range of the main air passage to which the thermal type air flow measuring instrument 100 is attached will be explained using Fig. 11. The flow velocity indicates an instantaneous speed, while the flow rate indicates an amount of flow per unit time, and the flow rate is generally expressed as flow rate = flow velocity x cross section area x time.

Therefore, the flow velocity and flow rate are uniquely determined by the duct bore (cross section area). For example, when the same amount of air flows for a small duct bore and a large duct bore, the flow velocity inside changes. That is, when the amount of air flow is the same, the flow velocity is lower for the large duct bore than the small duct bore.

There are various automobile engine capacities from small to large engine capacities. The amount of air that flows through the duct also changes depending on this engine capacity. It is as a matter of course that a large engine capacity generally requires a high flow rate and a small engine capacity requires only a low flow rate. Therefore, the flow velocity range of the heating resistor is adjusted by increasing the duct bore of the duct to which the thermal type air flow measuring instrument 100 is attached in the case of a large capacity engine and decreasing the duct bore in the case of a small duct bore.

In the graph shown in Fig. 11, D1 to D3 show the duct bores of the ducts to which the thermal type air flow measuring instrument 100 is attached. This is a graph showing flow rate ranges that can be measured of the heating resistor 3 with D1 denoting a flow rate range with an engine having a small engine capacity, D2 denoting that with a medium engine capacity and D3 denoting that with a large engine capacity, and the thermal type air flow measuring instrument 100 is generally used in such a way.

Here, simply suppose an attempt is made to measure a range of up to a large capacity using the duct of D1, which is the small duct bore. A flow velocity at a low flow rate can be secured, whereas the flow velocity increases at a high flow rate, which causes the heating resistor to be damaged more easily. Moreover, a pressure drop also increases at the high flow rate, which results in a problem that even when the engine is operated at a maximum engine speed, a required air flow rate cannot be obtained.

For this reason, measuring a range from low to high flow rates using one duct bore requires structural measures as described in the section "Description of related art."

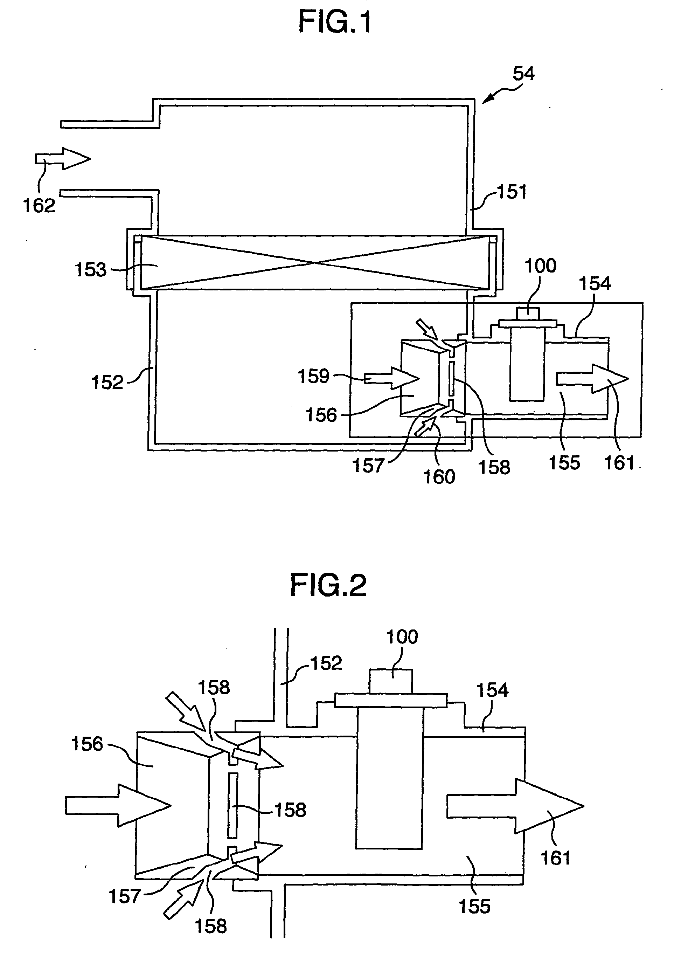

Next, the structure of the present invention will be explained more specifically using Figs. 1 to 3.

Fig. 1 shows an example where a duct 154 for forming a main air passage 155 which becomes part of the air cleaner is provided with a part to which the thermal type air flow measuring instrument 100 is attached, a squeeze 157 and a slit 158 downstream of the squeeze is disposed upstream thereof. Fig. 2 shows the inside of the rectangle shown by a dotted line in the vicinity of the thermal type air flow measuring instrument 100 in Fig. 1.

The air cleaner 54 is constructed with an air filter element 153 inside a case made up of a dirty side case 151 which is a case means principally making up the case upstream of the air filter element 153 and a clean side case 152 which is a case means principally making up the case of downstream the air filter element 153. A duct part that forms a main air passage inlet 156 is provided so as to protrude inside the clean side case 152. The squeeze 157 and slit 158 are provided in the duct protruding inside the clean side case 152 so as to be disposed downstream of the main air passage inlet 156. In this way, both an air flow 159 from the main air passage inlet 156 and an air flow 160 from the slit 158 are formed of the air which has passed through the air filter element 153. Furthermore, the slit 158 makes up an air passage that communicates the inside of the duct with the outside of the duct downstream of the main air passage inlet 156 without passing through the main air passage inlet 156. Therefore, the air flowing from the slit 158 into the downstream of the squeeze 157 is introduced into the main air passage without passing through the main air passage inlet 156.

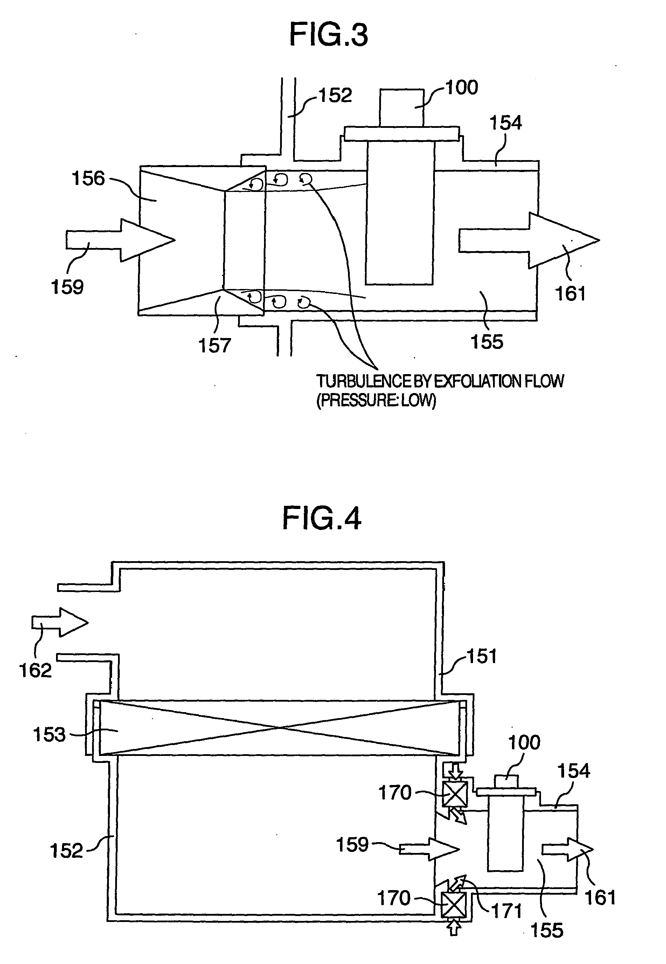

Next, the flow of the air flowing through the slit 158 will be explained. As shown in Fig. 3, an area with a low pressure is generated downstream of the squeeze 157 and turbulence by exfoliation flow occurs there. The way this turbulence by exfoliation flow occurs varies depending on the flow velocity and the higher the flow velocity, the more noticeable turbulence by exfoliation flow occurs. Here, the provision of the slit 158 forms a channel that communicates the high pressure area with the low pressure area. Since the air flows from the high pressure area into the low pressure area, the air flows from the perimeter (outside) of the duct protruding inside the clean side case 152 of the air cleaner into the downstream of the squeeze 157. Therefore, the amount of air flowing through this slit 158 is small when the flow rate is low and large when the flow rate is high.

This causes the air squeezed to a certain degree to reach the thermal type air flow measuring instrument 100 with the effect of the squeeze at a low flow rate, and can thereby improve the measuring accuracy at the low flow rate. Furthermore, with the effect of the squeeze, the flow velocity slightly increases at a high flow rate, but it is possible to prevent increases in pressure drop caused by the provision of the squeeze when the air flows through the slit. Since the flow velocity detected by the thermal type air flow measuring instrument 100 actually varies a great deal depending on the duct bore, squeeze bore, slit size and distance from the squeeze to the thermal type air flow measuring instrument 100, optimization is required through experiments or the like.

The air flow measuring range when the air flow measuring range of the thermal type air flow measuring instrument 100 of the present invention is ideally optimized will be explained using Fig. 12. To measure different flow rate ranges, a small duct bore D1 and a large duct bore D3 are required in the prior art, but the provision of the squeeze 157 and slit 158 allows a single duct to provide a range close to the flow rate range realized through the duct bores D1 to D3.

### [Embodiment 2]

Next, another embodiment will be explained using Fig. 4 and Fig. 5. The basic configuration is the same as that in Fig. 1, but this embodiment does not use the duct that protrudes inside the clean side case 152 of the air cleaner used in Fig. 1. Instead, an air filter element 170 is used to clean the air flowing through the slit 173. Like Embodiment 1, the slit 173 forms an air passage that communicates the inside of the duct and the outside of the duct downstream of the main air passage inlet 174 without passing through the main air passage inlet 174 and the air flowing from the slit 173 into the downstream of the squeeze 172 is introduced into the main air passage without passing through the main air passage inlet 174.

This embodiment can also achieve the same effect as that in Fig. 1, but since this embodiment requires another filter, it is necessary to evaluate which of the two is selected by comparing the cost and effect with those in the case where a duct protruding inside the clean side case 152 is provided.

World attention is being currently attracted to environment such as global warming. Therefore, vehicles with low fuel consumption are required. On the other hand, car users also require engine power not only to use their cars as a means for transporting people and baggage but also to enjoy driving per se of their cars. These two would be mutually contradictory matters from the conventional standpoint, but the embodiments according to the present invention realizes a vehicle in which both low fuel consumption and power of the engine are made compatible. This allows an ecofriendly engine control system with low fuel consumption and excellent power performance to be launched into the market.

Furthermore, the embodiments according to the present invention are mainly used for engine control for automobile applications and are applicable to a diesel engine and gasoline engine.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An air intake part on which a thermal type air flow measuring instrument for measuring a flow rate of an intake air on the basis of a heat energy radiated to the intake air from the thermal type air flow measuring instrument heated with a heating current, is mounted, comprising:
an intake duct including an accelerator to be arranged at an upstream side with respect to the thermal type air flow measuring instrument to accelerate a velocity of a part of the intake air passing through the intake duct to be applied to the thermal type air flow measuring instrument, a pressure reducer arranged at a downstream side with respect to the accelerator to reduce a pressure of the intake air passing through the intake duct,
wherein the part further comprises a communication path bypassing the accelerator to fluidly connect an outside of the intake duct to the intake air having the pressure decreased by the pressure reducer.

2. The air intake part according to claim 1, the accelerator and the pressure reducer form a throttle for decreasing locally a cross sectional opening area of the intake duct through which opening cross sectional opening area the intake air passes, and the communication path has a slit shape opening at a downstream side in the intake duct with respect to the throttle.

3. The air intake part according to claim 2,
wherein the intake duct has a portion thereof to be extended into a clean side case of an air cleaner, and the throttle and the slit shape are arranged in the portion.

4. The air intake part according to claim 3,
wherein the slit shape extends a substantially entire inner circumference of the portion.

5. The air intake part according to any of claims 1-4, wherein an inlet of the communication path is arranged at an outside of air cleaner, and includes an air filter as well as another air filter of the air cleaner.

6. The air intake part according to any of claims 1-4, wherein an inlet of the communication path is arranged at an inside of air cleaner and at a downstream side with respect to an air filter of the air cleaner.
